# EUROPEAN PATENT APPLICATION

(11) **EP 4 722 571 A1**
(43) Date of publication of application: **08.04.2026**
(21) Application number: 24810451.5
(22) Date of filing: 23.05.2024
(51) Int. Cl.: F16K 3/24, F16K 3/30, F16K 31/50

(54) **VALVE DEVICE**

(30) Priority: 24.05.2023 CN 202310598006
(71) Applicant: Zhejiang Sanhua Automotive Components Co., Ltd., Hangzhou, Zhejiang 310018 (CN)
(72) Inventor: ZHU, Minmin, Hangzhou, Zhejiang 310018 (CN); ZHU, Zhenshan, Hangzhou, Zhejiang 310018 (CN)
(74) Representative: Maikowski & Ninnemann Patentanwälte Partnerschaft mbB
(86) International application number: PCT/CN2024/094899
(87) International publication number: WO 2024/240214

(57) **Abstract**

A valve device (100). A sealing portion (21) of a valve core assembly (20) abuts against a valve port portion (40) when the valve core assembly (20) is at a first working position, and a first abutting portion (12) of a screw assembly (10) abuts against a second abutting portion (22) of the valve core assembly (20) in the axial direction or the circumferential direction so as to limit the impact between the valve core assembly (20) and the valve port portion (40).

## Description

The present application claims the priority to Chinese Patent Application No. 202310598006.2, titled "VALVE DEVICE", filed on May 24, 2023 with the China National Intellectual Property Administration, which is incorporated herein by reference in its entirety.

### FIELD

The present application relates to the technical field of fluid control, and in particular to a valve device.

### BACKGROUND

A valve device includes a valve core and a valve port portion. The valve port portion has a valve port, and the valve core can adjust an opening degree of the valve port. When the valve core closes the valve port, a sealing portion of the valve core strikes the valve port portion to halt the movement of the valve core. Over time, this leads to wear of the sealing portion of the valve core, compromising the sealing effectiveness.

### SUMMARY

An object of the present application is to provide a valve device, which improves the sealing effectiveness.

In order to achieve the above object, the following technical solutions are proposed in an embodiment of the present application.

A valve device includes a screw rod assembly, a valve core assembly, and a valve seat assembly. The screw rod assembly is in threaded engagement with the valve core assembly. The valve seat assembly includes a valve port portion, and the valve core assembly is configured to adjust an opening degree of a valve port of the valve port portion. The screw rod assembly includes a rod body and a first abutting portion. The rod body and the first abutting portion are connected in a fixed manner or a position-limiting manner, or the rod body and the first abutting portion are integrally formed. The first abutting portion protrudes relative to the rod body in a radial direction of the valve device. The valve core assembly includes a sealing portion and a second abutting portion. The valve device has a first operating position. When the valve device is at the first operating position, the sealing portion abuts against the valve port portion, and the first abutting portion abuts against the second abutting portion in an axial or circumferential direction of the valve device.

In the valve device according to the embodiment of the present application, when the valve core assembly is at the first operating position, the sealing portion of the valve core assembly abuts against the valve port portion, and the first abutting portion of the screw rod assembly abuts against the second abutting portion of the valve core assembly in the axial or circumferential direction, so as to limit a lowermost position of the valve core assembly relative to the first abutting portion, thereby preventing the impact between the valve core assembly and the valve port portion. Compared with the solution where the valve core is stopped upon striking the valve port portion, the technical solution according to the present application is advantageous for reducing wear of the sealing portion and thus improving the sealing effectiveness.

### BRIEF DESCRIPTION OF THE DRAWINGS

FIG. 1 is a schematic perspective structural view of a valve device according to an embodiment of the present application;
FIG. 2 is a schematic cross-sectional structural view taken along A-A in FIG. 1;
FIG. 3 is a schematic cross-sectional structural view taken along B-B in FIG. 1;
FIG. 4 is a schematic cross-sectional structural view of the valve device shown in FIG. 1 in an open state;
FIG. 5 is a schematic perspective structural view of a screw rod assembly of the valve device shown in FIG. 1;
FIG. 6 is a schematic enlarged structural view of a part C in FIG. 2;
FIG. 7 is a schematic perspective structural view of a valve seat assembly of the valve device shown in FIG. 1;
FIG. 8 is an enlarged schematic cross-sectional structural view showing a part of a valve device according to a second embodiment of the present application in a closed state;
FIG. 9 is an enlarged schematic cross-sectional structural view showing a part of a valve device according to a third embodiment of the present application in a closed state;
FIG. 10 is an enlarged schematic cross-sectional structural view showing a part of a valve device according to a fourth embodiment of the present application in a closed state;
FIG. 11 is an enlarged schematic cross-sectional structural view showing a part of a valve device according to a fifth embodiment of the present application in a closed state; and
FIG. 12 is a schematic perspective structural view of a screw rod assembly of the valve device shown in FIG. 11.

### DETAILED DESCRIPTION OF THE EMBODIMENTS

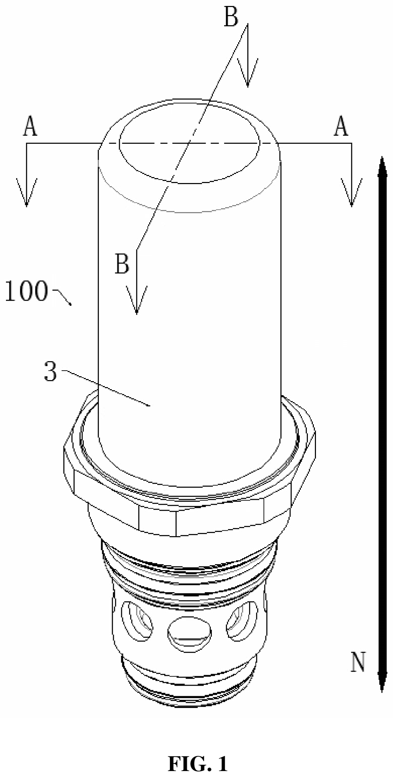

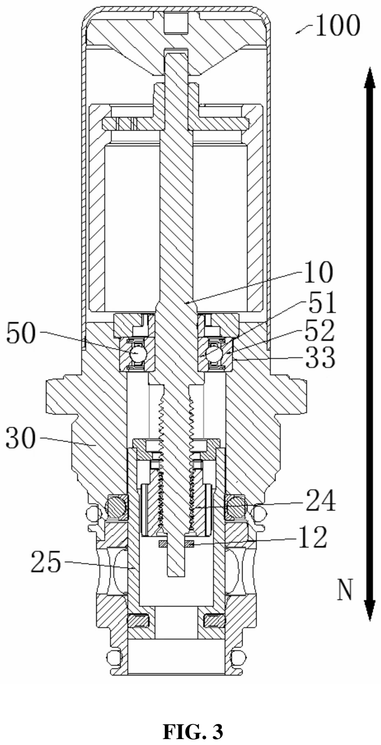

The present application will be further explained hereinafter in conjunction with FIGS. 1 to 12 and specific embodiments. In order to fully understand the present application, a lot of specific details are mentioned in the following detailed description. However, it should be understood by those skilled in the art that the specific components, devices, and features illustrated in the drawings and described herein are only exemplary and should not be construed as limitations.

A valve device 100 may be applied to vehicle thermal management systems or air conditioning systems, particularly in circulation systems that use CO2 (carbon dioxide) as the refrigerant. The vehicle thermal management systems include those for new energy vehicles. In a vehicle thermal management system, the valve device 100 generally serves as a throttling element or a switching element. The valve device 100 includes a driving component and a valve component 3. The driving component is located at an outer circumferential side of a part of the valve component 3, and is in a fixed connection or a position-limiting connection to the valve component 3. Further, a seal may be provided between the driving component and the valve component 3, which helps prevent water vapor or other impurities in the external environment from entering an assembly clearance between the drive component and the valve component 3, thereby avoiding corrosion or failure inside the drive component. The driving component includes an outer housing and a stator assembly, and the stator assembly is located at an outer circumferential side of a part of the valve component 3. At least a part of the stator assembly is located at an outer circumferential side of a rotor assembly 60 of the valve component 3. The valve device 100 is in electrical connection and/or signal connection to the outside world through the driving component.

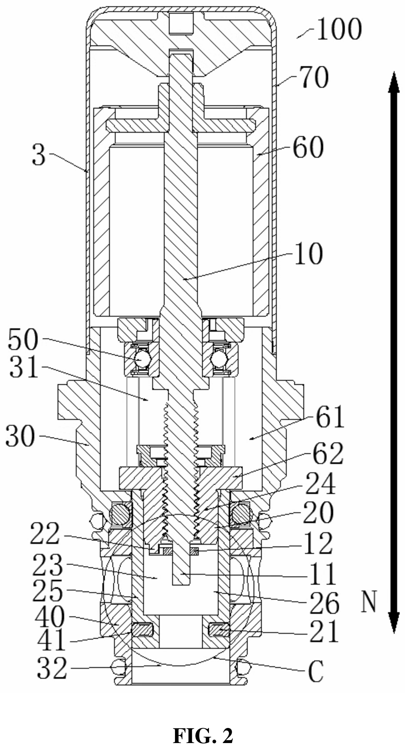

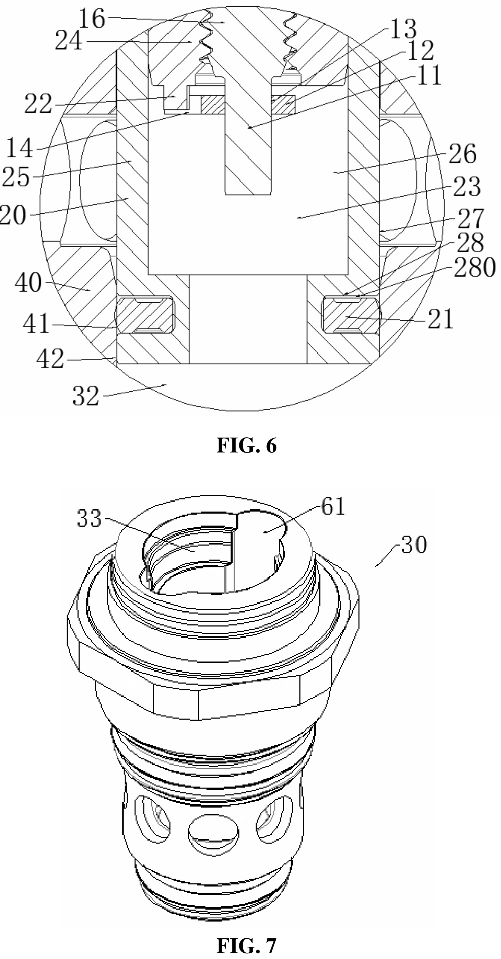

Referring to FIGS. 1 and 2, the valve component 3 includes a rotor assembly 60, a screw rod assembly 10, a valve core assembly 20, a valve seat assembly 30, and a sleeve 70. The valve seat assembly 30 is positioned at an outer circumferential side of a part of the screw rod assembly 10 and at an outer circumferential side of at least a part of the valve core assembly 20. The sleeve 70 is arranged around the rotor assembly 60 and fixedly connected to the valve seat assembly 30. The rotor assembly 60 is fixedly connected to the screw rod assembly 10; or, the rotor assembly 60 is connected to the screw rod assembly 10 and is limited in position relative to the screw rod assembly 10 in a circumferential direction. The screw rod assembly 10 is in transmission connection with the valve core assembly 20. Specifically, referring to FIGS. 2 and 7, the screw rod assembly 10 is in threaded engagement with the valve core assembly 20. The valve seat assembly 30 includes a limiting groove 61, and the valve core assembly 20 includes a limiting portion 62. The limiting groove 61 extends along an axial direction of the valve device 100, and at least a part of the limiting portion 62 is located in the limiting groove 61. In the circumferential direction of the valve device 100, a wall of the limiting groove 61 may be in contact with the limiting portion 62, or there may be a gap between the wall of the limiting groove 61 and the limiting portion 62. The wall of the limiting groove 61 restricts the circumferential rotation of the valve core assembly 20. Through the threaded engagement between the screw rod assembly 10 and the valve core assembly 20, the rotation of the screw rod assembly 10 drives the valve core assembly 20 to move in the axial direction of the valve device 100. It is understandable that the circumferential direction of the valve device 100 is perpendicular to its axial direction, allowing an error within 10 degrees. The limiting groove 61 does not have to be located on the valve seat assembly 30, and the limiting portion 62 does not have to be located on the valve core assembly 20. That is, either the valve seat assembly 30 or the valve core assembly 20 includes the limiting groove 61, while the other includes the limiting portion 62.

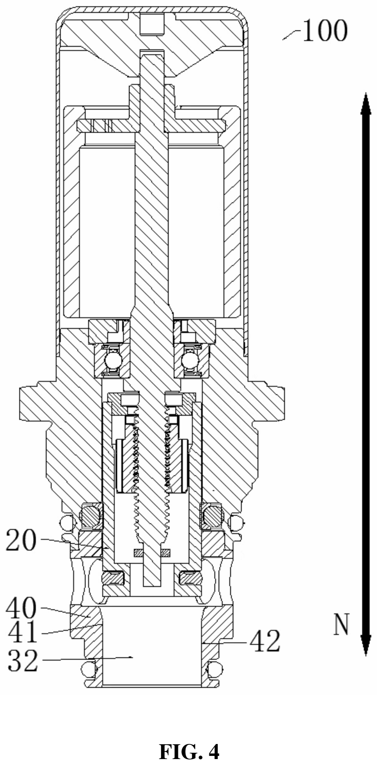

Referring to FIG. 2, the valve seat assembly 30 includes a valve port portion 40, which has a valve port 41. When the rotor assembly 60 rotates circumferentially under the excitation of a magnetic field generated by the stator assembly, the rotor assembly 60 drives the screw rod assembly 10 to rotate, and the screw rod assembly 10 drives the valve core assembly 20 to linearly move back and forth in the axial direction of the valve device 100. This allows the valve core assembly 20 to adjust an opening degree of the valve port 41 by moving towards or away from the valve port 41, thereby throttling a working medium at the valve port 41. The opening degree of the valve port 41 is defined as ranging from 0% to 100%. When the valve core assembly 20 closes the valve port 41, as shown in FIG. 2, the opening degree of the valve port 41 is 0%. Due to manufacturing tolerances, however, a 0% opening degree may allow a certain amount of leakage. When the valve core assembly 20 is at a fully open position, referring to FIG. 4, the opening degree of the valve port 41 is 100%. The axial direction of the valve device 100 is indicated by N as shown in FIGS. 1 to 4, and the axial direction of the valve device 100 is parallel to an axial direction of the rotor assembly 60. The term "fixedly connected" as used herein includes both detachable and non-detachable connections.

Referring to FIG. 2, the valve device 100 includes a screw rod assembly 10, a valve core assembly 20, and a valve seat assembly 30. The screw rod assembly 10 is in threaded engagement with the valve core assembly 20. The valve seat assembly 30 limits the rotation of the valve core assembly 20 in the circumferential direction of the valve device 100. The valve seat assembly 30 includes a valve port portion 40, and the valve core assembly 20 is configured to adjust an opening degree of a valve port 41 of the valve port portion 40. The screw rod assembly 10 includes a rod body 11 and a first abutting portion 12. The rod body 11 extends along the axial direction of the valve device 100 and is fixedly connected with the first abutting portion 12. Specifically, the rod body 11 is fixedly connected with the first abutting portion 12 through welding. The first abutting portion 12 protrudes relative to the rod body 11 in a radial direction of the valve device 100, which is perpendicular to the axial direction of the valve device 100 with a tolerance of 10 degrees. The valve core assembly 20 includes a sealing portion 21 and a second abutting portion 22. The sealing portion 21 is a sealing ring. The sealing portion 21 is configured to seal the valve port 41. The second abutting portion 22 is configured to abut against the first abutting portion 12 to limit a fully closed position of the valve core assembly 20. When the valve core assembly 20 is at the fully closed position, which is also a first operating position of the valve device, the opening degree of the valve port 41 is 0%. Referring to FIG. 2, the sealing portion 21 abuts against the valve port portion 40, or the sealing portion 21 is in sealing contact with the valve port portion 40. The valve seat assembly 30 can restrict the circumferential rotation of the valve core assembly 20. In the embodiment of the present application, the first abutting portion 12 of the screw rod assembly 10 abuts against the second abutting portion 22 of the valve core assembly 20 in the circumferential direction of the valve device 100, so as to restrict the circumferential rotation of the screw rod assembly 10. This limits the fully closed position of the valve core assembly 20, that is, this limits a lowermost position of the valve core assembly 20 relative to the first abutting portion 12, thereby preventing the valve core assembly from impacting the valve port portion. Compared with a solution where the valve core can only be stopped when it strikes the valve port portion, the technical solution according to the present application helps reduce the wear of the sealing portion 21, and thus improves the sealing effect of the valve device 100.

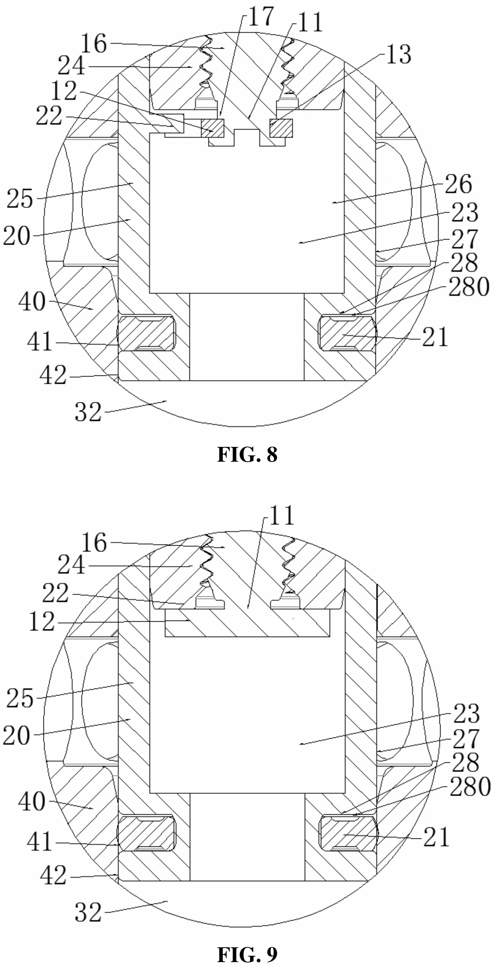

It is understandable that the rod body 11 and the first abutting portion 12 may alternatively be connected in a position-limiting manner. Specifically, referring to FIG. 8, the first abutting portion 12 has a fitting hole 13 or a fitting groove, and a part of the rod body 11 is located in the fitting hole 13. The rod body 11 includes a first stepped portion 17 and a bent portion, which clamp the first abutting portion 12 in the axial direction of the valve device 100. Alternatively, the rod body 11 and the first abutting portion 12 may be of an integral structure. Specifically, referring to FIG. 9, the rod body 11 and the first abutting portion 12 are integrally formed, and the first abutting portion 12 protrudes relative to the rod body 11 in the radial direction, which helps reduce the number of components. The valve core assembly 20 includes a valve core 25 and a sealing portion 21. The sealing portion 21 and the valve core 25 may be of an integral structure or may be provided as separate structures. If they are separate structures, the sealing portion 21 and the valve core 25 are connected in a fixed manner or a position-limiting manner. Specifically, referring to FIG. 6, the sealing portion 21 is a sealing ring 21, and the valve core 25 is a metallic structure. At least a part of the sealing ring 21 is located in a first groove 280 of the valve core 25. Alternatively, the first abutting portion 12 of the screw rod assembly 10 may abut against the second abutting portion 22 of the valve core assembly 20 in the axial direction of the valve device 100. Referring to FIG. 8, when the valve core assembly 20 is at the fully closed position, the first abutting portion 12 is located at a side of the second abutting portion 22 in the axial direction of the valve device 100, and the first abutting portion 12 abuts against the second abutting portion 22 in the axial direction, thereby limiting the fully closed position of the valve core assembly 20.

In some embodiments, referring to FIG. 2, the valve seat assembly 30 has an accommodation cavity 31 and a first channel 32. The accommodation cavity 31 and the first channel 32 are located at different sides of the valve core assembly 20 in the axial direction of the valve device 100. The first channel 32 forms at least a part of the valve port 41. The valve core assembly 20 has a balancing channel 23, and the second abutting portion 22 forms a part of a wall of the balancing channel 23. The balancing channel 23 is in communication with the accommodation cavity 31. When the valve core assembly 20 is at the fully closed position, the balancing channel 23 is in communication with the first channel 32, and at least a part of the first abutting portion 12 is located in the balancing channel 23. The working medium in the first channel 32 applies pressure on the valve core assembly 20. With the balancing channel 23 of the valve core assembly 20, the working medium in the first channel 32 can flow into the accommodation cavity 31 through the balancing channel 23, thereby reducing or eliminating the pressure difference across two axial ends of the valve core assembly 20 and balancing the operation of the valve core assembly 20. Moreover, the second abutting portion 22 forms a part of the wall of the balancing channel 23. When the valve core assembly 20 is at the fully closed position, at least a part of the first abutting portion 12 is located in the balancing channel 23. These arrangements help improve space utilization and thus contribute to a compact structural design of the valve device 100. It is understandable that the first abutting portion 12 may be located in the balancing channel 23 throughout its movement.

Referring to FIGS. 2, 3, and 7, the valve device 100 includes a bearing 50. The valve seat assembly 30 has a mounting hole 33, and at least a part of the bearing 50 is located in the mounting hole 33. The bearing 50 includes an inner ring 51 and an outer ring 52. The inner ring 51 is rotatable relative to the outer ring 52, and the outer ring 52 is fixedly connected to a wall of the mounting hole 33. A part of the screw rod assembly 10 is located in a hole of the inner ring 51, and the screw rod assembly 10 is fixedly connected to the inner ring 51. The bearing 50 is configured to prevent an axial displacement of the screw rod assembly 10 or restrict the amount of the axial displacement. The valve core assembly 20 includes an internal threaded portion 24, which is in threaded engagement with the screw rod assembly 10. The first abutting portion 12 and the second abutting portion 22 are located at the same side of the internal threaded portion 24 in the axial direction of the valve device 100. Specifically, in the axial direction of the valve device 100, the first abutting portion 12 is farther from the bearing 50 than the internal threaded portion 24, and the second abutting portion 22 is also farther from the bearing 50 than the internal threaded portion 24. This arrangement helps shorten the distance between the internal threaded portion 24 and the bearing 50, thereby improving the operation smoothness of the screw rod assembly 10 and reducing radial wobbling of the screw rod assembly 10. In an embodiment of the present application, a fixed limiting portion is also provided, which is located at an upper side of the internal threaded portion 24 and is fixedly connected to the valve core 25. The fixing methods thereof include welding and riveting. The fixed limiting portion is configured to abut against the internal threaded portion 25 to limit an axial position of the internal threaded portion.

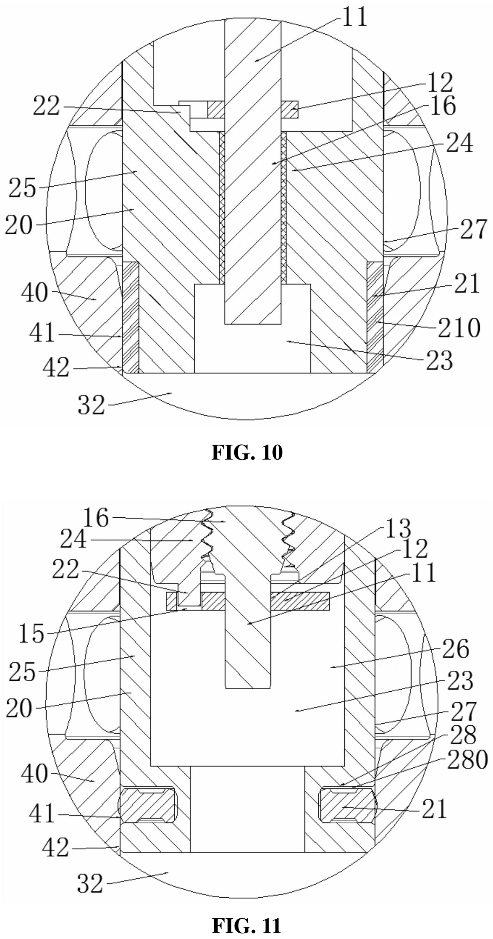

It is understandable that the rod body 11 of the screw rod assembly 10 includes an external threaded portion 16. A thread clearance between the internal threaded portion 24 of the valve core assembly 20 and the external threaded portion 16 may serve as a part of the balancing channel 23. To increase a flow space of the balancing channel 23, the internal threaded portion 24 may further be provided with a communicating channel for the working medium to flow through, and the communicating channel is in communication with the accommodation cavity 31 and a first through-hole 26. In the axial direction of the valve device 100, alternatively, the first abutting portion 12 may be closer to the bearing 50 than the internal threaded portion 24, and the second abutting portion 22 may also be closer to the bearing 50 than the internal threaded portion 24. Referring to FIG. 10, in the axial direction of the valve device 100, the first abutting portion 12 is farther from the valve port portion 40 than the internal threaded portion 24, and the second abutting portion 22 is also farther from the valve port portion 40 than the internal threaded portion 24.

Referring to FIG. 6, the valve core assembly 20 includes a valve core 25 and an internal threaded portion 24, which are separate structures. The internal threaded portion 24 is connected to the valve core 25 in a fixed manner or a position-limiting manner. Specifically, the valve core 25 is made of a metallic material and has a first through-hole 26. The internal threaded portion 24 is made of a material with plasticity, and at least a part of the internal threaded portion 24 is located in the first through-hole 26. The internal threaded portion 24 is fixedly connected to the valve core 25 through injection molding, or the internal threaded portion 24 is connected to the valve core 25 in a position-limiting manner. The internal threaded portion 24 and the valve core 25 form at least a part of a wall of the balancing channel 23. The valve core 25 and the sealing portion 21 are connected in a fixed manner or a position-limiting manner; or, the valve core 25 and the sealing portion 21 are integrally formed. The internal threaded portion 24 is in threaded engagement with the external threaded portion 16 of the screw rod assembly 10, which helps reduce the wear of the internal threaded portion 24 and the external threaded portion 16 and improve the service life of the valve device 100.

Referring to FIG. 6, the second abutting portion 22 of the valve core assembly 20 and the internal threaded portion 24 are of an integral structure. The internal threaded portion 24 and the second abutting portion 22 are made of a material with plasticity. Specifically, the internal threaded portion 24 and the second abutting portion 22 are made of plastic. The internal threaded portion 24 and the second abutting portion 22 are integrally formed by injection-molding. The hardness of the internal threaded portion 24 and the second abutting portion 22 is less than that of the valve core 25. The second abutting portion 22 protrudes relative to the internal threaded portion 24 towards the first abutting portion 12 in the axial direction of the valve device 100. The second abutting portion 22 is configured to abut against the first abutting portion 12 of the screw rod assembly 10 in the circumferential direction, so as to limit the fully closed position of the valve core assembly 20. The internal threaded portion 24 and the second abutting portion 22 are integrally formed by injection-molding, which facilitates the manufacturing of the second abutting portion 22. Moreover, the second abutting portion 22 is made of a material with plasticity, which, compared with metallic materials, helps reduce the noise generated by the impact between the second abutting portion 22 and the first abutting portion 12.

In another embodiment, referring to FIG. 8, the second abutting portion 22 and the valve core 25 are of an integral structure, and the second abutting portion 22 and the valve core 25 are made of a metallic material. The second abutting portion 22 protrudes relative to the valve core 25 towards the screw rod assembly 10 in the radial direction of the valve device 100, and the second abutting portion 22 forms a part of a wall of the first through-hole 26. The second abutting portion 22 is configured to abut against the first abutting portion 12 of the screw rod assembly 10 in the circumferential direction, so as to limit the fully closed position of the valve core assembly 20. The second abutting portion 22 has a simple structure and is easy to manufacture. Moreover, being made of a metallic material, the second abutting portion 22 has improved structural strength, which helps enhance the positional precision of the valve core assembly 20 when it is at the fully closed position. It is understandable that the second abutting portion 22 may alternatively abut against the first abutting portion 12 of the screw rod assembly 10 in the axial direction. It is also understandable that the internal threaded portion 24 and the valve core 25 may be of an integral structure. Referring to FIG. 10, the internal threaded portion 24 and the valve core 25 are made of a metallic material and are integrally formed.

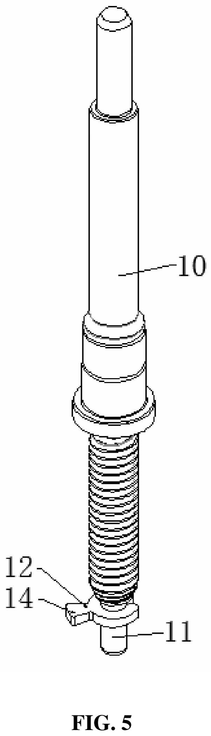

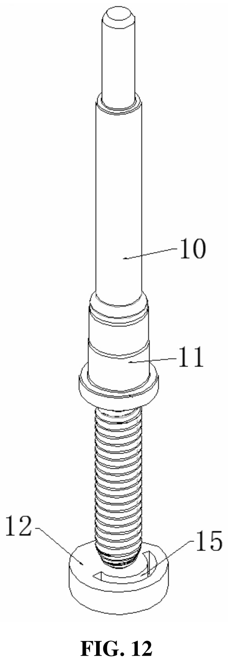

Referring to FIGS. 5 and 6, the screw rod assembly 10 includes a rod body 11 and a first abutting portion 12, which are separately formed. The first abutting portion 12 has a fitting hole 13, and a part of the rod body 11 is located in the fitting hole 13. The rod body 11 is welded to or in interference fit with a wall of the fitting hole 13. The first abutting portion 12 includes an extending portion 14. The extending portion 14 extends towards the valve core 25 in the radial direction of the valve device 100. The valve seat assembly 30 is configured to restrict the circumferential rotation of the valve core assembly 20. When the valve core assembly 20 is at the fully closed position, the extending portion 14 abuts against the second abutting portion 22 in the circumferential direction of the valve device 100, thereby restricting the circumferential rotation of the screw rod assembly 10 and limiting the fully closed position of the valve core assembly 20. The first abutting portion 12 and the rod body 11 are separately formed, and the first abutting portion 12 includes the radially extending portion. With this arrangement, the first abutting portion 12 is simple in structure and easy to manufacture. In another specific embodiment, referring to FIGS. 11 and 12, the first abutting portion 12 has a limiting hole 15 that opens towards the internal threaded portion 24. The limiting hole 15 extends in the circumferential direction of the valve device 100. When the valve core assembly 20 is at the fully closed position, at least a part of the second abutting portion 22 is located in the limiting hole 15, and the second abutting portion 22 abuts against a wall of the limiting hole 15 in the circumferential direction of the valve device 100, thereby restricting the circumferential rotation of the screw rod assembly 10 to limit the fully closed position of the valve core assembly 20. It is understandable that the first abutting portion 12 may alternatively be integrally formed on the rod body 11.

Referring to FIG. 8, the screw rod assembly 10 includes a rod body 11 and a first abutting portion 12, which are separately formed. The rod body 11 includes an external threaded portion 16 and a first stepped portion 17. The external threaded portion 16 is in threaded engagement with the internal threaded portion 24 of the valve core assembly 20. In the axial direction of the valve device 100, the first stepped portion 17 is closer to the first abutting portion 12 than the external threaded portion 16. The first abutting portion 12 abuts against the first stepped portion 17 in the axial direction of the valve device 100. The first stepped portion 17 can limit an axial position of the first abutting portion 12 to facilitate the assembly and positioning of the first abutting portion 12, thereby improving the positional precision of the valve core assembly 20 when it closes the valve.

Referring to FIG. 6, the valve core assembly 20 includes a valve core 25 and a sealing portion 21. The valve core 25 includes an outer side wall 27 and a first groove portion 28 that opens on the outer side wall 27. The sealing portion 21 and the valve core 25 are separately formed. The sealing portion 21 is specifically a rubber sealing ring, a plastic sealing member, or the like. At least a part of the sealing portion 21 is located in a first groove 280 of the first groove portion 28. When the valve core assembly 20 is at the fully closed position, the first groove portion 28 and the valve port portion 40 press against the sealing portion 21 to seal the valve port 41, causing the opening degree of the valve port 41 to be 0%. Specifically, the valve port portion 40 includes an inner side wall 42 and has a first channel 32. A wall of the first channel 32 includes the inner side wall 42, and the first channel 32 forms at least a part of the valve port 41. When the valve core assembly 20 is at the fully closed position, a part of the valve core assembly 20 is located in the first channel 32, and the inner side wall 42 and the first groove portion 28 press against the sealing portion 21 against in the radial direction of the valve device 100.

In some embodiments, referring to FIG. 10, the sealing portion 21 includes a coating layer 210 made of a material with plasticity. The coating layer 210 adheres to a surface of the valve core 25. When the valve core assembly 20 is at the fully closed position, the coating layer 210 is in sealing contact with the valve port portion 40. It is understandable that the sealing portion 21 may alternatively include a vulcanized layer 210 that is formed by vulcanization with at least the valve core 25 being as the substrate. When the valve core assembly 20 is at the fully closed position, the vulcanized layer 210 is in sealing contact with the valve port portion 40. The sealing portion 21 includes the coating layer 210 or the vulcanized layer 210, and with this configuration, the sealing effect of the valve device 100 is improved.

It should be noted that the above embodiments are merely used to illustrate the present application and are not intended to limit the technical solutions described in the present application. Although the present application has been described in detail in this specification with reference to the above embodiments, those of ordinary skill in the art should understand that, modifications or equivalent substitutions may be made to the present application by those skilled in the art, and all technical solutions and improvements thereof that do not depart from the spirit and scope of the present application shall fall within the scope of the claims of the present application.

## Claims

1. A valve device, comprising:
a screw rod assembly (10);
a valve core assembly (20); and
a valve seat assembly (30), wherein
the screw rod assembly (10) is in threaded engagement with the valve core assembly (20), the valve seat assembly (30) comprises a valve port portion (40), and the valve core assembly (20) is configured to adjust an opening degree of a valve port (41) of the valve port portion (40);
the screw rod assembly (10) comprises a rod body (11) and a first abutting portion (12), wherein the rod body (11) and the first abutting portion (12) are connected in a fixed manner or a position-limiting manner, or the rod body (11) and the first abutting portion (12) are integrally formed;
the first abutting portion (12) protrudes relative to the rod body (11) in a radial direction of the valve device;
the valve core assembly (20) comprises a sealing portion (21) and a second abutting portion (22), and the valve device has a first operating position; and
when the valve device is at the first operating position, the sealing portion (21) abuts against the valve port portion (40), and the first abutting portion (12) abuts against the second abutting portion (22) in an axial or circumferential direction of the valve device.

2. The valve device according to claim 1, wherein
the valve seat assembly (30) has an accommodation cavity (31) and a first channel (32), the accommodation cavity (31) and the first channel (32) are located at different sides of the valve core assembly (20) in the axial direction of the valve device, and the first channel (32) forms at least a part of the valve port (41);
the valve core assembly (20) has a balancing channel (23), the second abutting portion (22) forms a part of a wall of the balancing channel (23), and the balancing channel (23) is in communication with the accommodation cavity (31); and
when the valve core assembly (20) is at a fully closed position, the balancing channel (23) is in communication with the first channel (32), and at least a part of the first abutting portion (12) is located in the balancing channel (23).

3. The valve device according to claim 1 or 2, wherein
the valve seat assembly (30) is configured to limit rotation of the valve core assembly (20) in the circumferential direction of the valve device; and
the valve core assembly (20) comprises an internal threaded portion (24) that is in threaded engagement with the screw rod assembly (10), and the first abutting portion (12) and the second abutting portion (22) are located at the same side of the internal threaded portion (24) in the axial direction of the valve device.

4. The valve device according to claim 3, comprising a bearing (50), wherein
the valve seat assembly (30) has a mounting hole (33), and at least a part of the bearing (50) is located in the mounting hole (33);
the bearing (50) comprises an inner ring (51) and an outer ring (52), and the inner ring (51) is rotatable relative to the outer ring (52);
the outer ring (52) is fixedly connected to a wall of the mounting hole (33), a part of the screw rod assembly (10) is located in a hole of the inner ring (51), and the screw rod assembly (10) is fixedly connected to the inner ring (51); and
the first abutting portion (12) is located farther from the bearing (50) than the internal threaded portion (24) in the axial direction of the valve device, and the second abutting portion (22) is located farther from the bearing (50) than the internal threaded portion (24) in the axial direction of the valve device.

5. The valve device according to claim 3 or 4, wherein
the valve core assembly (20) comprises a valve core (25);
the internal threaded portion (24) and the valve core (25) are connected in a fixed manner or a position-limiting manner, or the internal threaded portion (24) and the valve core (25) are integrally formed; and
the valve core (25) and the sealing portion (21) are connected in a fixed manner or a position-limiting manner, or the valve core (25) and the sealing portion (21) are integrally formed, wherein
the second abutting portion (22) and the internal threaded portion (24) are integrally formed, and the second abutting portion (22) protrudes relative to the internal threaded portion (24) towards the first abutting portion (12) in the axial direction of the valve device; or
the second abutting portion (22) and the valve core (25) are integrally formed, and the second abutting portion (22) protrudes relative to the valve core (25) towards the screw rod assembly (10) in the radial direction of the valve device; or
the second abutting portion (22) and the internal threaded portion (24) are integrally formed, wherein when the valve core assembly (20) is at a fully closed position, the first abutting portion (12) is located at a side of the second abutting portion (22) in the axial direction of the valve device.

6. The valve device according to claim 5, wherein
the internal threaded portion (24) and the valve core (25) are separately formed, the valve core (25) has a first through-hole (26), and at least a part of the internal threaded portion (24) is located in the first through-hole (26); and
the internal threaded portion (24) and the valve core (25) are connected in a fixed manner by injection molding or connected in a position-limiting manner, and the internal threaded portion (24) and the valve core (25) form at least a part of a wall of a balancing channel (23), wherein
the internal threaded portion (24) is made of a material with plasticity, and the second abutting portion (22) is made of a material with plasticity; or
the valve core (25) is made of a metallic material, the second abutting portion (22) is made of a metallic material, and the second abutting portion (22) forms a part of a wall of the first through-hole (26).

7. The valve device according to claim 5 or 6, wherein
the rod body (11) and the first abutting portion (12) are separately formed, the first abutting portion (12) has a fitting hole (13), a part of the rod body (11) is located in the fitting hole (13), and the rod body (11) is welded to or in interference fit with a wall of the fitting hole (13), wherein
the first abutting portion (12) comprises an extending portion (14) that extends towards the valve core (25) in the radial direction of the valve device, wherein when the valve core assembly (20) is at the fully closed position, the extending portion (14) abuts against the second abutting portion (22) in the circumferential direction of the valve device; or
the first abutting portion (12) has a limiting hole (15) that opens towards the internal threaded portion (24), wherein when the valve core assembly (20) is at the fully closed position, at least a part of the second abutting portion (22) is located in the limiting hole (15), and the second abutting portion (22) abuts against a wall of the limiting hole (15) in the circumferential direction of the valve device.

8. The valve device according to claim 7, wherein the rod body (11) comprises an external threaded portion (16) and a first stepped portion (17), the external threaded portion (16) is in threaded engagement with the internal threaded portion (24), the first stepped portion (17) is closer to the first abutting portion (12) than the external threaded portion (16) in the axial direction of the valve device, and the first abutting portion (12) abuts against the first stepped portion (17) in the axial direction of the valve device.

9. The valve device according to any one of claims 1 to 8, wherein
the valve core assembly (20) comprises a valve core (25), the valve core (25) comprises an outer side wall (27) and a first groove portion (28), the first groove portion (28) opens on the outer side wall (27), the sealing portion (21) and the valve core (25) are separately formed, at least a part of the sealing portion (21) is located in a first groove (280) of the first groove portion (28), wherein when the valve core assembly (20) is at a fully closed position, the first groove portion (28) and the valve port portion (40) press against the sealing portion (21); or
the sealing portion (21) comprises a coating layer (210) made of a material with plasticity, wherein when the valve core assembly (20) is at the fully closed position, the coating layer (210) is in sealing contact with the valve port portion (40); or
the sealing portion (21) comprises a vulcanized layer (210), wherein when the valve core assembly (20) is at the fully closed position, the vulcanized layer (210) is in sealing contact with the valve port portion (40).

10. The valve device according to claim 9, comprising a rotor assembly (60) that is fixedly connected to the screw rod assembly (10), wherein
one of the valve seat assembly (30) and the valve core assembly (20) comprises a limiting groove (61), the other of the valve seat assembly (30) and the valve core assembly (20) comprises a limiting portion (62), the limiting groove (61) extends in the axial direction of the valve device, and at least a part of the limiting portion (62) is located in the limiting groove (61);
a wall of the limiting groove (61) is in contact with the limiting portion (62) in the circumferential direction of the valve device, or there is a gap between the wall of the limiting groove (61) and the limiting portion (62) in the circumferential direction of the valve device;
the valve port portion (40) comprises an inner side wall (42), the valve port portion (40) has a first channel (32), a wall of the first channel (32) comprises the inner side wall (42), and the first channel (32) forms at least a part of the valve port (41); and
when the valve core assembly (20) is at the fully closed position, a part of the valve core assembly (20) is located in the first channel (32), and the inner side wall (42) and the first groove portion (28) press against the sealing portion (21) in the radial direction of the valve device.
